# EUROPÄISCHE PATENTSCHRIFT

(11) **EP 3 756 157 B1**
(45) Veröffentlichungstag und Bekanntmachung des Hinweises auf die Patenterteilung: **06.04.2022**
(21) Anmeldenummer: 19706508.9
(22) Anmeldetag: 15.02.2019
(51) Int. Cl.: G06T 3/40, H04N 5/232

(54) **VERFAHREN ZUM ERSTELLEN VON PANORAMABILDERN, ZUGEHÖRIGES COMPUTERPROGRAMMPRODUKT, STEUERGERÄT UND FAHRZEUG**
METHOD FOR CREATING PANORAMIC IMAGES, ASSOCIATED COMPUTER PROGRAM PRODUCT, CONTROL DEVICE AND VEHICLE
PROCEDE DE CREATION D'IMAGES PANORAMIQUES, PROGRAMME D'ORDINATEUR, APPAREIL DE CONTROL ET VEHICULE ASSOCIES

(30) Priorität: 22.02.2018 DE 102018202656
(43) Veröffentlichungstag der Anmeldung: 30.12.2020
(73) Patentinhaber: Bayerische Motoren Werke Aktiengesellschaft, 80809 München (DE)
(72) Erfinder: HOFFMANN, Philipp, 85221 Dachau (DE)
(86) Internationale Anmeldenummer: PCT/EP2019/053877
(87) Internationale Veröffentlichungsnummer: WO 2019/162211

(56) Entgegenhaltungen:
- EP-A1- 2 916 540
- US-A1- 2006 285 732
- US-A1- 2008 159 594
- US-A1- 2014 132 707
- US-A1- 2015 254 825

## Beschreibung

Die vorliegende Erfindung betrifft ein Verfahren, ausgeführt auf einem programmierbaren Prozessor einer Rechenvorrichtung, zum Generieren von Panoramabildern aus Einzelbildinformationen. Die Einzelbildinformationen werden aus Kameras eines Kamerasystems eines Fahrzeugs gewonnen. Des Weiteren betrifft die Erfindung ein Computerprogrammprodukt und ein Steuergerät zum Ausführen eines derartigen Verfahrens sowie ein Fahrzeug umfassend ein derartiges Steuergerät.

Aus dem Stand der Technik (siehe z.B. US2014/132707A1, US2015/0254825A1 oder EP2916540A1) sind Methoden bekannt, um aus Bildinformationen von Kamerasystemen eines Fahrzeugs Panoramabilder zu erstellen. Im Rahmen dieser Erfindung werden unter "Panoramabilder" solche Bilder verstanden, die aus zumindest zwei Einzelbildern zusammengesetzt sind. Ein Sonderfall von Panoramabildern sind Surround-View-Bilder, die einem aus Einzelbildern zusammengesetzten Bild entsprechen, wobei die Einzelbilder die gesamte Umgebung darstellen und somit einen 360° Rundumblick ermöglichen. Hierzu werden mehrere Teilansichten der Umgebung gleichzeitig aufgenommen, wobei anschließend eine Bildbearbeitung derart erfolgt, dass Kontrast, Helligkeit und teilweise die Farbtemperatur des Inhalts manipuliert und damit angeglichen werden. Dadurch werden die einzelnen Aufnahmen zu einem Gesamtbild zusammengefügt. Diese Angleichung wird meist über eine Strecke realisiert, die sich beispielsweise bei Panoramabildern von links nach rechts und bei einem Surround-View-Bild im Uhrzeigersinn erstreckt. Es ist allerdings problematisch, dass mehrere Kameras jeweils in realen Anwendungen in großen Abständen voneinander entfernt angebracht sind. Dadurch sind Schlagschatten, Verschmutzungswerte, punktuelle Lichteinfälle oder Beleuchtungssituationen unterschiedlich. Beispielsweise ist in dieser Hinsicht die Einfahrt in einen Tunnel problematisch. Einstellungen für Gain (Signalverstärkung) und Exposure (Lichtwert) sind bei den Kameras stets unterschiedlich gewählt, um per Definition die beste Darstellung zu finden. Dies ist allerdings bei einer Erstellung von Panoramabildern nachteilig, da als Gesamtbild eine stimmige Szene präsentiert werden soll. Eine Auslegung mit einer zentral gesteuerten Einheit zum Ermitteln von Belichtungsparametern ist deswegen ein Zielkonflikt, da eine solche Anwendung sicherheitsgerichtet sein kann und deswegen beispielsweise bei starkem punktuellem Lichteinfall eine Kamera in der Lage sein muss, dies zu kompensieren, um die Funktion im Gesamtsystem nicht zu verlieren.

Es ist daher Aufgabe der Erfindung, ein Verfahren zum Generieren von Panoramabildern bereitzustellen, dass bei einfacher Anwendbarkeit ein sicheres und zuverlässiges Generieren von Panoramabildern mit hoher Qualität ermöglicht.

Die Lösung der Aufgabe erfolgt durch die Merkmale der unabhängigen Ansprüche. Die Unteransprüche haben bevorzugte Weiterbildungen der Erfindung zum Inhalt.

Die Aufgabe wird somit gelöst durch ein Verfahren, ausgeführt auf einem programmierbaren Prozessor einer Rechenvorrichtung, zum Generieren von Panoramabildern aus Bildinformationen, die von Kameras eines Kamerasystems eines Fahrzeugs generiert wurden. Dazu sind die Kameras insbesondere derart angeordnet, dass diese unterschiedliche Bereiche der Umgebung des Fahrzeugs erfassen. Zunächst erfolgt ein Bereitstellen von zumindest zwei Bildern, die mit unterschiedlichen Kameras des Kamerasystems aufgenommen wurden. Die Bilder stellen teilweise denselben Bereich einer Umgebung dar. Somit lassen sich die Bilder zu einem Panoramabild zusammensetzen, das die Bereiche der Umgebung der beiden Bilder kombiniert. An derjenigen Stelle, an der die Bilder denselben Bereich der Umgebung darstellen, ist ein Zusammenführen notwendig. Um das Panoramabild aus den Bildern zu generieren, erfolgt zunächst ein Auffinden von Merkmalen in den Bildern. Bei solchen Merkmalen handelt es sich um einzelne Gegenstände oder Personen, die auf den Bildern sichtbar sind. Beispielsweise kann es sich bei solchen Merkmalen um geparkte Fahrzeuge, Gegenstände auf der Fahrbahn oder am Fahrbahnrand, um Pflanzen oder um Personen handeln. Jedes Merkmal ist vorteilhafterweise auf beiden Bildern, die zu einem Panoramabild zusammengeführt werden sollen, erkennbar. Das Auffinden von Merkmalen und das Identifizieren entsprechender Bildbereiche ist aus dem Stand der Technik bekannt. Anschließend erfolgt ein lokales Verformen der Bilder, so dass die korrespondierenden Merkmale auf den Bildern dieselbe Perspektive aufweisen. Auch hierzu sind aus dem Stand der Technik entsprechende Vorgehensweisen bekannt. Anders als im Stand der Technik erfolgt das Zusammenführen und Angleichen der Bilder jedoch nicht entlang einer fest vorgegebenen Raumrichtung, vielmehr erfolgt das Zusammenführen und Angleichen der Bilder ausgehend von den zuvor ermittelten Merkmalen. Das Zusammenführen und Angleichen erfolgt schrittweise entlang schrittweise wachsender konzentrischer Kreisbereiche um die Merkmale. Somit werden die Bilder bevorzugt wellenförmig ausgehend von den konzentrischen Kreisen angeglichen. Dies führt zu einem optimalen Angleichen der einzelnen Bilder untereinander. Insbesondere bedeutet Angleichen, dass per Bildverarbeitung Parameter der Bilder wie Kontrast und/oder Helligkeit und/oder Farbtemperatur manipuliert werden. Durch das erfindungsgemäße Verfahren ist somit eine sehr robuste und schnelle Anpassung zweier Bilder ermöglicht. Sollen mehrere Bilder zu einem Panoramabild zusammengesetzt werden, so erfolgt das Zusammenführen und Angleichen der Bilder ausgehend von Merkmalen, die auf jeweils zumindest zwei der Bilder erkennbar sind.

Vorteilhafterweise wird entlang jedes Kreisbereichs um die Merkmale eine Bildmanipulation mit vordefinierten Bildmanipulationsmerkmalen durchgeführt. Die Bildmanipulationsmerkmale ergeben sich aus den Belichtungsparametern der anzugleichenden Bilder. Die Bildbearbeitungsparameter umfassen somit Bearbeitungsparameter zum Verändern von Bildparametern der einzelnen Bilder, insbesondere zum Ändern von Kontrast und/oder Helligkeit und/oder Farbtemperatur, um ein Angleichen der beiden Bilder zu erreichen. Da die Bildmanipulationen von den erkannten Merkmalen ausgehen, erfolgt ein gleichmäßiges Angleichen der einzelnen Bilder, so dass keine Übergänge durch sichtbare Helligkeitsunterschiede und/oder Kontrastunterschiede und/oder Farbunterschiede entstehen.

Da die Bildmanipulationen für solche Bildbereiche durchgeführt werden, die sich wellenförmig von den Merkmalen weg erstrecken, kommt es zwangsläufig zu einem Aufeinandertreffen der konzentrisch wachsenden Kreisbereiche um die einzelnen Merkmale und somit zu Interferenzen zwischen den einzelnen Bildmanipulationen. So ist ein erster Kreisbereich um ein erstes Merkmal vorhanden, an dem eine erste Bildmanipulation mit ersten Manipulationsmerkmalen erfolgt, während gleichzeitig ein zweiter Kreisbereich um ein von dem ersten Merkmal verschiedenes zweites Merkmal vorhanden ist. An dem zweiten Kreisbereich erfolgt eine zweite Bildmanipulation mit zweiten Bildmanipulationsmerkmalen. Bei Aufeinandertreffen des ersten Kreisbereichs auf den zweiten Kreisbereich an einem Schnittpunkt wird für die Bildmanipulation in den Überlappungsbereich von erstem Kreisbereich und zweiten Kreisbereich eine Kombination der ersten Bildmanipulationsmerkmale und zweiten Bildmanipulationsmerkmale angenommen. Somit erfolgt ein Vermischen der ersten Bildmanipulation mit der zweiten Bildmanipulation, wodurch wiederum ein Angleichen der Bildmanipulationen erfolgt, so dass sichtbare Übergänge vermieden werden.

Besonders vorteilhaft ist vorgesehen, dass der erste Kreisbereich zumindest in dem Überlappungsbereich nur solange schrittweise vergrößert wird, bis dieser einen Abstand zu dem zweiten Merkmal erreicht hat, der einem halben Abstand des zweiten Merkmals zu dem Schnittpunkt entspricht. Somit überlappt der erste Kreisbereich den zweiten Kreisbereich über einen halben Radius des zweiten Kreisbereichs, wobei der halbe Radius an dem Schnittpunkt bestimmt wird. Gleiches gilt für den zweiten Kreisbereich. Der zweite Kreisbereich wird vorteilhafterweise zumindest in dem Überlappungsbereich nur solange schrittweise vergrößert, bis dieser einen Abstand zu dem ersten Merkmal erreicht hat, der einem halben Abstand des ersten Merkmals zu dem Schnittpunkt entspricht. Somit wird ein Übergangsbereich zwischen dem ersten Kreisbereich und dem zweiten Kreisbereich realisiert, durch den sichergestellt ist, dass keine sichtbaren Übergänge vorhanden sind. Vielmehr wird erreicht, dass die einzelnen Bilder gleichmäßig angeglichen werden und ein homogenes Panoramabild generieren, selbst wenn die einzelnen Bilder, die zu dem Panoramabild zusammengesetzt wurden, mit unterschiedlichen Belichtungsparametern aufgenommen wurden.

In den Überlappungsbereich zwischen dem Schnittpunkt und einem Ende des ersten Kreisbereichs werden die ersten Bildmanipulationsmerkmale mit einer Gewichtung auf die zweiten Bildmanipulationsmerkmale aufgeprägt. Die Gewichtung beträgt 0,5 an dem Schnittpunkt und fällt bis auf Null an dem Ende des ersten Kreisbereichs ab. Gleiches gilt für den Bereich zwischen dem Schnittpunkt und einem Ende des zweiten Kreisbereichs. In diesem Abschnitt werden die zweiten Bildmanipulationsmerkmale mit einer Gewichtung auf die ersten Bildmanipulationsmerkmale aufgeprägt, wobei die Gewichtung von 0,5 an dem Schnittpunkt bis auf Null am Ende des zweiten Kreisbereichs absinkt. Dadurch ergibt sich ein gleichmäßiges gegenseitiges Beeinflussen, ohne dass starke Sprünge verursacht werden. Insbesondere wird durch diese Methode bevorzugt das gesamte Panoramabild abgedeckt.

Vorteilhafterweise erfolgt außerdem ein Ermitteln eines Farbhistogramms für jedes Bild. Zusätzlich wird für jedes Farbhistogramm ein Mittelwert ermittelt, so dass ein arithmetisches Mittel aus besagten Mittelwerten bestimmt werden kann. Die Farbhistogramme werden derart angeglichen, dass Grenzwerte der einzelnen Farbhistogramme so verändert werden, dass der Mittelwert jedes Farbhistogramms auf das arithmetische Mittel geändert wird. Auf diese Weise erfolgt ein sicheres und zuverlässiges Angleichen der einzelnen Bilder untereinander, so dass Sprünge aufgrund unterschiedlicher Bildparameter wie Helligkeit und/oder Kontrast und/oder Farbtemperatur innerhalb des Panoramabildes vermieden werden.

Die Bilder sind insbesondere Rohbilder der einzelnen Kameras des Kamerasystems. Dies ist insbesondere deshalb vorteilhaft, da durch vorgeschaltete Bildmanipulationen wesentliche Informationen für das erfindungsgemäße Verfahren verloren gehen könnten. Die Rohbilder werden zunächst beschnitten, so dass solche Bereiche der Rohbilder, die Teile eines das Kamerasystem tragenden Fahrzeugs zeigen, entfernt werden. Vorteilhafterweise erfolgt außerdem ein Anpassen der Bilder der Rohbereiche in vertikaler Richtung, bevorzugt durch Cropping. Auf diese Weise werden vertikale Bildbereiche, die in dem Panoramabild nicht angezeigt werden sollen, entfernt. Solche vertikalen Bildbereiche betreffen oftmals einen Himmelbereich, der für das Panoramabild nicht notwendig ist, die Bildparameter des gesamten Einzelbilds jedoch erheblich beeinflussen kann.

Die Erfindung betrifft außerdem ein Computerprogrammprodukt. Das Computerprogrammprodukt umfasst Instruktionen, welche, wenn sie auf einem programmierbaren Prozessor einer Rechenvorrichtung ausgeführt werden, den Prozessor veranlassen, die Schritte des Verfahrens wie zuvor beschrieben auszuführen. Bei der Rechenvorrichtung handelt es sich insbesondere um ein Steuergerät, besonders um ein Steuergerät eines Fahrzeugs. Bei dem Prozessor handelt es sich insbesondere um einen integrierten Schaltkreis, besonders bevorzugt um einen Field Programmable Gate Array (FPGA). Alternativ kann der Prozessor ein Schaltkreis der Kamera sein, der durch In-System-Programmierung (ISP) programmiert wurde.

Die Erfindung betrifft des Weiteren ein Steuergerät. Das Steuergerät ist bevorzugt ausgebildet, das Verfahren wie zuvor beschrieben auszuführen. Dazu ist das Steuergerät zur Signalübertragung mit Kameras eines Kamerasystems eines Fahrzeugs koppelbar. Das Steuergerät ist insbesondere ein Steuergerät eines Fahrzeugs. Schließlich betrifft die Erfindung ein Fahrzeug, umfassend ein Steuergerät wie zuvor beschrieben. Außerdem umfasst das Fahrzeug mehrere Kameras eines Kamerasystems zum Generieren von Bildinformationen von unterschiedlichen Bereichen einer Umgebung des Fahrzeugs. Bevorzugt ist vorgesehen, dass sich Erfassungsbereiche der Kameras teilweise überschneiden. Das Steuergerät ist mit dem Kamerasystem zur Signalübertragung gekoppelt. Somit ermöglicht das Fahrzeug einem Fahrer hochwertige Panoramabilder bereitzustellen, die auf Einzelbildern basieren, die durch die Kameras des Kamerasystems erfasst wurden.

Weitere Einzelheiten, Merkmale und Vorteile der Erfindung ergeben sich aus der nachfolgenden Beschreibung und den Figuren. Es zeigen:
- Figur 1: eine schematische Abbildung von Rohbildern von Kameras eines Kamerasystems,
- Figur 2: eine schematische Ansicht eines ersten Bearbeitungsschritts eines Verfahrens gemäß einem Ausführungsbeispiel der Erfindung,
- Figur 3: eine schematische Ansicht eines zweiten Bearbeitungsschritts des Verfahrens gemäß dem Ausführungsbeispiel der Erfindung,
- Figur 4: eine schematische Ansicht eines dritten Bearbeitungsschritts des Verfahrens gemäß dem Ausführungsbeispiel der Erfindung,
- Figur 5: eine schematische Ansicht eines vierten Bearbeitungsschritts eines Verfahrens gemäß einem Ausführungsbeispiel der Erfindung,
- Figur 6: eine schematische Ansicht eines zusätzlichen Bearbeitungsschritts des Verfahrens gemäß dem Ausführungsbeispiel der Erfindung, und
- Figur 7: eine schematische Ansicht eines Fahrzeugs gemäß einem Ausführungsbeispiel der Erfindung.

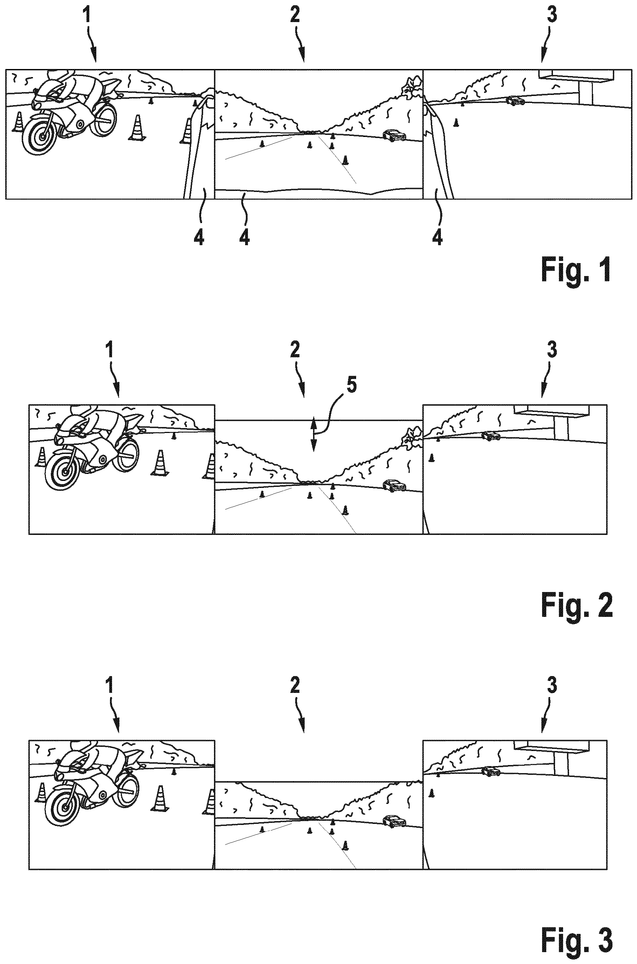

Figur 1 zeigt schematisch ein erstes Bild 1, ein zweites Bild 2 und ein drittes Bild 3, die unterschiedliche Bereiche einer Umgebung eines Fahrzeugs zeigen. Die Bilder 1, 2, 3 wurden durch einzelne Kameras eines Kamerasystems des Fahrzeugs aufgenommen und sind insbesondere zeitlich synchronisiert.

Besonders vorteilhaft wurden die Bilder mittels Global-Shutter (Zentralverschluss) aufgenommen. Auf diese Weise sind insbesondere Verzerrungen bei schnellen Bewegungen vermieden, was das Anwenden des erfindungsgemäßen Verfahrens gemäß einem Ausführungsbeispiel vereinfacht.

Die Bilder 1, 2, 3 weisen als Rohdaten Bereiche auf, die Fahrzeugteile 4 zeigen. Dies ist bedingt durch einen Einbau der Kameras an dem Fahrzeug. Da solche Fahrzeugteile unvorhersehbare Reflexionen oder Schatten erzeugen können, auf dem späteren Panoramabild aber nicht zu sehen sein sollen, sind diese Bereiche für die weitere Verarbeitung nachteilig. Daher erfolgt ein Entfernen der Bildbereiche, die die Fahrzeugteile 4 zeigen.

Das Ergebnis dieses ersten Bearbeitungsschritts ist in Figur 2 gezeigt. Die Bilder 1, 2, 3 zeigen somit keine Fahrzeugteile 4 mehr. Allerdings zeigt das zweite Bild einen vertikalen Bereich 5, der auf dem späteren Panoramabild nicht zu sein wird. Dieser vertikale Bereich 5 zeigt einen Himmel oberhalb des Horizonts, der sehr helle Bildinformationen bereithält und bei Dunkelheit nahezu schwarz erscheinen kann. Dieser Bereich trägt somit einen erheblichen Anteil zu den Gesamtbildparametern des zweiten Bildes bei, obwohl dieser vertikale Bereich 5 für das spätere Panoramabild nicht benötigt wird. Daher erfolgt ein Entfernen des vertikalen Bereichs 5 mittels Cropping. Das Ergebnis dieses zweiten Bearbeitungsschritts ist in Figur 3 gezeigt. Somit stehen die in Figur 3 gezeigten Bilder 1, 2, 3 zur weiteren Verarbeitung zur Verfügung. Das Bild 1 und das zweite Bild 3 zeigen eine Ansicht der Umgebung seitlich des Trägerfahrzeugs, während das zweite Bild 2 eine Ansicht der Umgebung rückwärtig des Trägerfahrzeugs zeigt. Diese drei Bilder 1, 2, 3 lassen sich somit zu einem Panorama zusammensetzen, das den gesamten Bereich der Umgebung von einer Seite des Fahrzeugs über den rückwärtigen Bereich zu einer zweiten Seite des Fahrzeugs darstellt.

Der beschriebene erste Bearbeitungsschritt und zweite Bearbeitungsschritt zum Generieren der in Figur 3 gezeigten Bilder lässt sich vorteilhafterweise in einer Hardware konfigurieren. Somit lassen sich der erste Bearbeitungsschritt und der zweiten Bearbeitungsschritt sehr schnell ausführen, vorteilhafterweise direkt innerhalb des Kamerasystems, dass das erste Bild 1, das zweite Bild 2 und das dritte Bild 3 aufnimmt. Die nachfolgenden Schritte werden vorteilhafterweise als Softwarecode in einem Steuergerät implementiert.

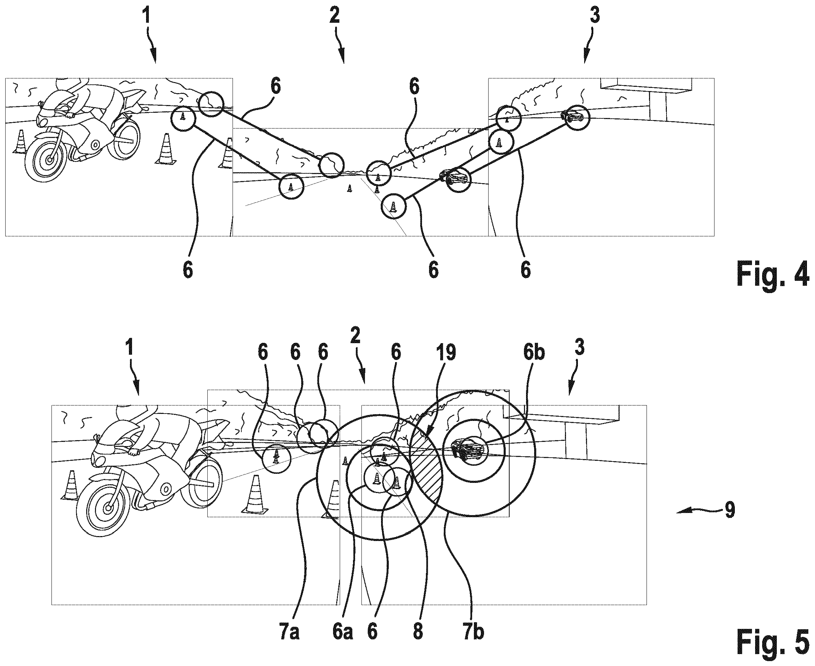

In Figur 4 ist ein nächster Bearbeitungsschritt gezeigt. Dabei werden in dem ersten Bild und dem zweiten Bild Merkmale 6 identifiziert, die sowohl in den ersten Bild 1 als auch in dem zweiten Bild 2 erkennbar sind. Gleiches gilt für das zweite Bild 2 und das dritte Bild 3. Auch hier werden Merkmale 6 identifiziert, die sowohl auf dem zweiten Bild 2 als auch auf dem dritten Bild 3 erkennbar sind.

Das Erkennen von Merkmalen 6 in korrespondierenden Bildbereichen des ersten Bilds 1 und des zweiten Bilds 2 sowie des zweiten Bilds 2 und des dritten Bilds 3 sind aus dem Stand der Technik bekannt.

Zum Erstellen von Panoramabildern 7 erfolgt, wie in Figur 5 gezeigt, zunächst ein lokales Verformen des ersten Bilds 1, des zweiten Bilds 2 und des dritten Bilds 3, um eine Perspektive der Merkmale 6 anzupassen. Danach erfolgt ein schrittweises Zusammenführen und Angleichen der Bilder 1, 2, 3, wobei das schrittweise Zusammenführen und Angleichen, ausgehend von Merkmalen 6, erfolgt. Somit erfolgt das Zusammenführen und Angleichen entlang sich vergrößernder konzentrischer Kreisbereiche. Die konzentrischen Kreisbereiche werden ausgehend von den Merkmalen 6 schrittweise vergrößert, um eine Angleichung durchzuführen. Dies ist in Figur 5 vereinfacht dargestellt.

Das Angleichen erfolgt derart, dass ausgehend von jedem Merkmal 6 und entlang der schrittweise vergrößerten konzentrischen Kreisbereiche 7 eine jeweilige Bildmanipulation mit entsprechenden Bildmanipulationsmerkmalen erfolgt. Diese Bildmanipulation umfasst ein Verändern von Kontrastwerten und/oder Helligkeitswerten und/oder Farbtemperaturwerten. Durch das Verändern dieser Werte erfolgt insbesondere ein Angleichen dieser Parameter der einzelnen Bilder 1, 2, 3.

Durch das schrittweise Vergrößern der konzentrischen Kreisbereiche 7 erfolgt zwangsläufig eine Interferenz von verschiedenen Kreisbereichen 7, die zu verschiedenen Merkmalen 6 gehören. Sobald zwei Kreisbereiche 7 aufeinandertreffen, entsteht ein Schnittpunkt 8 und Überlappungsbereich 19. Auch dies ist in Figur 5 vereinfacht gezeigt.

In Figur 5 ist gezeigt, wie, ausgehend von einem ersten Merkmal 6a, ein erster konzentrischer Kreisbereich 7a vergrößert wird. An dem Schnittpunkt 8 trifft der erste Kreisbereich 7a auf einen ebenfalls schrittweise vergrößerten Kreisbereich 7b um ein zweites Merkmal 6b. Der erste Kreisbereich 7a wird anschließend schrittweise soweit vergrößert, bis dieser den halben Abstand zwischen Schnittpunkt 8 und zweitem Merkmal 6b erreicht hat. Somit entsteht ein Überlappungsbereich 19 des ersten konzentrischen Kreisbereichs 7a und des zweiten konzentrischen Kreisbereichs 7b. Gleiches gilt ebenso für den zweiten konzentrischen Kreisbereich 7b, was jedoch aus Gründen der Übersichtlichkeit in Figur 5 nicht gezeigt ist.

Sobald der erste Kreisbereich 7a sein Ende erreicht hat, d.h., sobald der erste Kreisbereich 7a den halben Abstand zwischen zweitem Merkmal 6b und Schnittpunkt 8 erreicht hat, wird der erste Kreisbereich 7a nicht weiter vergrößert. Außerdem wird in dem Überlappungsbereich 19 die erste Bildmanipulation mit der zweiten Bildmanipulation kombiniert. Dies erfolgt derart, dass die ersten Bildmanipulationsmerkmale mit einer Gewichtung auf die zweiten Bildmanipulationsmerkmale aufgeprägt werden. Die Gewichtung beträgt an dem Schnittpunkt 8 den Wert von 0,5, wobei die Gewichtung bis zu dem Ende des ersten Kreisbereichs 7b bis auf Null abnimmt. Das Abnehmen erfolgt insbesondere linear, wodurch sich vorteilhafterweise ein weicher Übergang zwischen den einzelnen Bildmanipulationen rund um das erste Merkmal 6a und das zweite Merkmal 6b einstellt.

Bevorzugt wird der erste Kreisbereich 7a außerhalb des Überlappungsbereichs 19 solange weiter vergrößert, bis dieser erneut auf einen anderen Kreisbereich 7 trifft oder das Ende des Panoramabilds 9 erreicht hat.

Insbesondere wird das in Figur 5 beispielhaft für das erste Merkmal 6a beschriebene Verfahren auf sämtliche andere Merkmale 6 angewandt. Somit ergibt sich ein gleichmäßiges wechselseitiges Beeinflussen der einzelnen Bildmanipulationen ohne starke Sprünge zu verursachen, wobei gleichzeitig das ganze Panoramabild 9 von der Bildmanipulation abgedeckt ist.

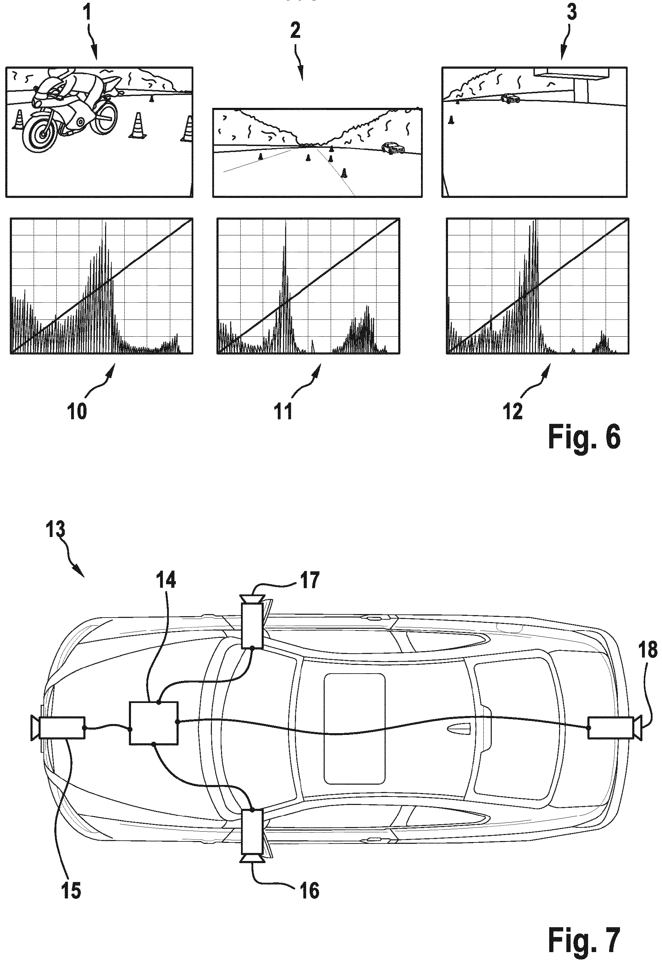

Figur 6 zeigt ein weiteres Bearbeiten der einzelnen Bilder 1, 2, 3, wobei als Ausgangspunkt insbesondere das erste Bild 1, das zweite Bild 2 und das dritte Bild 3 nach dem Ausführen des ersten Bearbeitungsschritts und des zweiten Bearbeitungsschritts verwendet werden, so dass als Ausgangspunkt die in Figur 3 gezeigten Bilder 1, 2, 3 verwendet werden. Für jedes dieser Bilder 1, 2, 3 wird ein Farbhistogramm 10, 11, 12 erstellt. Dies bedeutet, dass für das erste Bild 1 ein erstes Farbhistogramm 10, für das zweite Bild 2 ein zweites Farbhistogramm 11 und für das dritte Bild 3 ein drittes Farbhistogramm 12 erstellt werden. Aus allen diesen Farbhistogrammen 10, 11, 12 werden jeweilige Mittelwerte der jeweiligen Farbhistogramme 10, 11, 12 bestimmt und aus diesen Mittelwerten wird ein arithmetisches Mittel berechnet. Anschließend werden Grenzwerte der jeweiligen Histogramme 10, 11, 12 verändert, so dass der jeweilige Mittelwert des jeweiligen Histogramms 10, 11, 12 auf das arithmetische Mittel geändert wird. Somit erfolgt eine Histogrammangleichung, wodurch die einzelnen Bilder 1, 2, 3 aneinander angeglichen werden. Dies führt wiederum zu einer Vermeidung von Sprüngen der Bildparameter innerhalb des Panoramabilds 7.

Figur 7 zeigt schematisch ein Fahrzeug 13 gemäß einem Ausführungsbeispiel der Erfindung. Das Fahrzeug 13 umfasst ein Steuergerät 14 sowie eine erste Kamera 15, eine zweite Kamera 16, eine dritte Kamera 17 und eine vierte Kamera 18. Die Kameras 15, 16, 17 und 18 bilden ein Kamerasystem, mit dem insbesondere die gesamte Umgebung rund um das Fahrzeug 13 erfasst werden kann. Die erste Kamera 15, die zweite Kamera 16, die dritte Kamera 17 und die vierte Kamera 18 sind allesamt zur Signalübertragung mit dem Steuergerät 14 verbunden. Das Steuergerät 14 ist insbesondere ausgebildet, das zuvor beschriebene Verfahren auszuführen. Vorteilhafterweise umfasst das Steuergerät 14 dafür zumindest einen FPGA oder zumindest einen ISP.

Es ist somit vorgesehen, dass mittels der Kameras 15, 16, 17 und 18 Einzelbilder erfasst werden, die bevorzugt gleichzeitig aufgenommen werden oder nur einen minimalen zeitlichen Versatz bei der Aufnahme aufweisen.

Besonders vorteilhaft ist vorgesehen, dass die zuvor beschriebenen Bearbeitungsschritte in dem Steuergerät 14 derart codiert sind, dass einstellbar ist, mit welcher Frequenz diese Bearbeitungsschritte ausgeführt werden sollen. Somit lassen sich insbesondere Frequenzen von weniger als 10 Hz einstellen, um weniger performante Steuergeräte 14 nicht zu überlasten. Bei höherperformanteren Steuergeräten lassen sich insbesondere Frequenzen oberhalb von 10 Hz einstellen.

Es ist bevorzugt vorgesehen, dass das erfindungsgemäße Verfahren gemäß dem beschriebenen Ausführungsbeispiel nur dann ausgeführt wird, wenn sich Merkmale 6 in den Bildbereichen identifizieren lassen. Ist ein solches Identifizieren von Merkmalen 6 nicht erfolgreich, so wird auf das Angleichen gemäß dem Ausführungsbeispiel der Erfindung verzichtet.

### Bezugszeichenliste:

- 1: erstes Bild
- 2: zweites Bild
- 3: drittes Bild
- 4: Fahrzeugteil
- 5: vertikaler Bereich
- 6: Merkmal
- 6a: erstes Merkmal
- 6b: zweites Merkmal
- 7: Kreisbereich
- 7a: erster Kreisbereich
- 7b: zweiter Kreisbereich
- 8: Schnittpunkt
- 9: Panoramabild
- 10: erstes Histogramm
- 11: zweites Histogramm
- 12: drittes Histogramm
- 13: Fahrzeug
- 14: Steuergerät
- 15: erste Kamera
- 16: zweite Kamera
- 17: dritte Kamera
- 18: vierte Kamera
- 19: Überlappungsbereich

## Patentansprüche

1. Verfahren, ausgeführt auf einem programmierbaren Prozessor einer Rechenvorrichtung, zum Generieren von Panoramabildern aus Bildinformationen, die von Kameras (15, 16, 17, 18) eines Kamerasystems eines Fahrzeugs (13) generiert wurden, umfassend die Schritte:
- Bereitstellen von zumindest zwei Bildern (1, 2, 3), die teilweise denselben Bereich einer Umgebung darstellen,
- Auffinden von Merkmalen (6) in den Bildern (1, 2, 3),
- lokales Verformen der Bilder (1, 2, 3), sodass korrespondierende Merkmale (6) auf den Bildern (1, 2, 3) dieselbe Perspektive aufweisen,
**dadurch gekennzeichnet, dass** das Verfahren zudem den Schritt umfasst:
- schrittweises Zusammenführen und Angleichen der Bilder (1, 2, 3) zu einem Panoramabild (9), ausgehend von den Merkmalen (6), entlang schrittweise wachsender konzentrischer Kreisbereiche (7) um die Merkmale (6).

2. Verfahren nach Anspruch 1, **dadurch gekennzeichnet, dass** entlang jedes Kreisbereichs (7) um die Merkmale (6) Bildmanipulationen mit vordefinierten Bildmanipulationsmerkmalen durchgeführt werden, um insbesondere einen Kontrast und/oder eine Helligkeit und/oder eine Farbtemperatur der Bilder (1, 2, 3) anzugleichen.

3. Verfahren nach Anspruch 2, **dadurch gekennzeichnet, dass**
- ein erster Kreisbereich (7a) um ein erstes Merkmal (6a) vorhanden ist, an dem eine erste Bildmanipulation mit ersten Bildmanipulationsmerkmalen erfolgt, und
- ein zweiter Kreisbereich (7b) um ein von dem ersten Merkmal (6a) verschiedenes zweites Merkmal (6b) vorhanden ist, an dem eine zweite Bildmanipulation mit zweiten Bildmanipulationsmerkmalen erfolgt,
- wobei bei Aufeinandertreffen des ersten Kreisbereichs (7a) auf den zweiten Kreisbereich (7b) an einem Schnittpunkt (8) für die Bildmanipulation in einem Überlappungsbereich (19) von erstem Kreisbereich (7a) und zweitem Kreisbereich (7b) eine Kombination der ersten Bildmanipulationsmerkmale und zweiten Bildmanipulationsmerkmale erfolgt.

4. Verfahren nach Anspruch 3, **dadurch gekennzeichnet, dass**
- der erste Kreisbereich (7a) zumindest in dem Überlappungsbereich (19) nur so lange schrittweise vergrößert wird, bis dieser einen Abstand zu dem zweiten Merkmal (6b) erreicht hat, der einem halben Abstand des zweiten Merkmals (6b) zu dem Schnittpunkt (8) entspricht, und
- der zweite Kreisbereich (7b) zumindest in dem Überlappungsbereich (19) nur so lange schrittweise vergrößert wird, bis dieser einen Abstand zu dem ersten Merkmal (6a) erreicht hat, der einem halben Abstand des ersten Merkmals (6a) zu dem Schnittpunkt (8) entspricht.

5. Verfahren nach Anspruch 4, **dadurch gekennzeichnet, dass** in dem Überlappungsbereich (19)
- zwischen dem Schnittpunkt (8) und einem Ende des ersten Kreisbereichs (7a) die ersten Bildmanipulationsmerkmale mit einer Gewichtung auf die zweiten Bildmanipulationsmerkmale aufgeprägt werden, wobei die Gewichtung von 0,5 an dem Schnittpunkt (8) bis auf 0 an dem Ende des ersten Kreisbereichs (7a) absinkt, und
- zwischen dem Schnittpunkt (8) und einem Ende des zweiten Kreisbereichs (7b) die zweiten Bildmanipulationsmerkmale mit einer Gewichtung auf die ersten Bildmanipulationsmerkmale aufgeprägt werden, wobei die Gewichtung von 0,5 an dem Schnittpunkt (8) bis auf 0 an dem Ende des zweiten Kreisbereichs (7b) absinkt.

6. Verfahren nach einem der vorhergehenden Ansprüche, **dadurch gekennzeichnet, dass** für jedes Bild (1, 2, 3) ein Farbhistogramm (10, 11, 12) ermittelt und ein Mittelwert des Farbhistogramms (10, 11, 12) bestimmt wird, wobei ein arithmetisches Mittel der Mittelwerte bestimmt wird und wobei Grenzwerte des jeweiligen Farbhistogramms (10, 11, 12) der Bilder (1, 2, 3) verändert werden, um den Mittelwert auf das arithmetische Mittel zu verändern.

7. Verfahren nach einem der vorhergehenden Ansprüche, **dadurch gekennzeichnet, dass** die Bilder (1, 2, 3) Rohbilder der Kameras (15, 16, 17, 18) des Kamerasystems sind, wobei solche Bereiche der Rohbilder, die Teile (4) eines das Kamerasystem tragenden Fahrzeugs (13) zeigen, entfernt werden und/oder wobei die Rohbilder in vertikaler Richtung auf einen solchen Bereich beschnitten werden, der in dem Panoramabild (9) angezeigt werden soll.

8. Computerprogrammprodukt umfassend Instruktionen, welche, wenn Sie auf einem programmierbaren Prozessor einer Rechenvorrichtung ausgeführt werden, den Prozessor veranlassen, die Schritte eines Verfahrens nach einem der vorhergehenden Ansprüche durchzuführen.

9. Steuergerät (14) ausgebildet zum Ausführen eines Verfahrens nach einem der Ansprüche 1 bis 7, wobei das Steuergerät (14) zur Signalübertragung mit Kameras (15, 16, 17, 18) eines Kamerasystems eines Fahrzeugs (13) koppelbar ist.

10. Fahrzeug (13) umfassend ein Steuergerät (14) nach Anspruch 9 und mehrere Kameras (15, 16, 17, 18) eines Kamerasystems zum Generieren von Bildinformationen von unterschiedlichen Bereichen einer Umgebung des Fahrzeugs (13), wobei das Steuergerät (14) mit dem Kamerasystem zur Signalübertragung gekoppelt ist.

## Claims

1. Method, carried out on a programmable processor of a computing apparatus, for generating panoramic images from image information that has been generated by cameras (15, 16, 17, 18) of a camera system of a vehicle (13), comprising the steps of:
- providing at least two images (1, 2, 3), part of which shows the same area of surroundings,
- locating features (6) in the images (1, 2, 3),
- locally deforming the images (1, 2, 3), with the result that corresponding features (6) in the images (1, 2, 3) have the same perspective,
**characterized in that** the method also comprises the step of:
- gradually combining and aligning the images (1, 2, 3) to produce a panoramic image (9), based on the features (6), along gradually growing concentric circular areas (7) around the features (6).

2. Method according to Claim 1, **characterized in that** image manipulations using predefined image manipulation features are performed along each circular area (7) around the features (6) in order to align in particular a contrast and/or a brightness and/or a colour temperature of the images (1, 2, 3).

3. Method according to Claim 2, **characterized in that**
- a first circular area (7a) is present around a first feature (6a), at which a first image manipulation using first image manipulation features takes place, and
- a second circular area (7b) is present around a second feature (6b), which is different from the first feature (6a), at which a second image manipulation using second image manipulation features takes place,
- wherein the meeting of the first circular area (7a) and the second circular area (7b) at a point of intersection (8) for the image manipulation results in the first image manipulation features and the second image manipulation features being combined in an area of overlap (19) for the first circular area (7a) and the second circular area (7b) .

4. Method according to Claim 3, **characterized in that**
- the first circular area (7a) is gradually enlarged at least in the area of overlap (19) only until it has reached a distance from the second feature (6b) that corresponds to one half of the distance of the second feature (6b) from the point of intersection (8), and
- the second circular area (7b) is gradually enlarged at least in the area of overlap (19) only until it has reached a distance from the first feature (6a) that corresponds to one half of the distance of the first feature (6a) from the point of intersection (8).

5. Method according to Claim 4, **characterized in that** in the area of overlap (19),
- between the point of intersection (8) and an end of the first circular area (7a), the first image manipulation features are impressed on the second image manipulation features with a weighting, the weighting falling from 0.5 at the point of intersection (8) to 0 at the end of the first circular area (7a), and
- between the point of intersection (8) and an end of the second circular area (7b), the second image manipulation features are impressed on the first image manipulation features with a weighting, the weighting falling from 0.5 at the point of intersection (8) to 0 at the end of the second circular area (7b).

6. Method according to one of the preceding claims, **characterized in that** a colour histogram (10, 11, 12) is ascertained for each image (1, 2, 3) and a mean value of the colour histogram (10, 11, 12) is determined, wherein an arithmetic mean of the mean values is determined and wherein limit values of the respective colour histogram (10, 11, 12) of the images (1, 2, 3) are altered in order to alter the mean value to provide the arithmetic mean.

7. Method according to one of the preceding claims, **characterized in that** the images (1, 2, 3) are raw images from the cameras (15, 16, 17, 18) of the camera system, wherein such areas of the raw images as show parts (4) of a vehicle (13) carrying the camera system are removed and/or wherein the raw images are trimmed in a vertical direction to provide an area that is intended to be displayed in the panoramic image (9).

8. Computer program product comprising instructions that, when executed on a programmable processor of a computing apparatus, cause the processor to perform the steps of a method according to one of the preceding claims.

9. Control unit (14) designed to carry out a method according to one of Claims 1 to 7, wherein the control unit (14) is couplable to cameras (15, 16, 17, 18) of a camera system of a vehicle (13) for the purpose of signal transmission.

10. Vehicle (13) comprising a control unit (14) according to Claim 9 and multiple cameras (15, 16, 17, 18) of a camera system for generating image information for different areas of surroundings of the vehicle (13), wherein the control unit (14) is coupled to the camera system for the purpose of signal transmission.

## Revendications

1. Procédé, exécuté sur un processeur programmable d'un dispositif de calcul, servant à générer des images panoramiques à partir d'informations d'image qui ont été générées par des caméras (15, 16, 17, 18) d'un système de caméras d'un véhicule (13), comprenant les étapes consistant à :
- fournir au moins deux images (1, 2, 3) qui représentent en partie la même zone d'un environnement,
- trouver des caractéristiques (6) sur les images (1, 2, 3),
- déformer localement les images (1, 2, 3) de sorte que des caractéristiques correspondantes (6) sur les images (1, 2, 3) présentent la même perspective,
**caractérisé en ce que** le procédé comprend en outre l'étape consistant à :
- fusionner et ajuster progressivement les images (1, 2, 3) en image panoramique (9) en partant des caractéristiques (6) le long de zones circulaires concentriques (7) autour des caractéristiques (6), progressivement croissantes.

2. Procédé selon la revendication 1, **caractérisé en ce que** le long de chaque zone circulaire (7) autour des caractéristiques (6), des manipulations d'image avec des caractéristiques de manipulation d'image prédéfinies sont effectuées afin d'ajuster en particulier un contraste et/ou une luminosité et/ou une température de couleur des images (1, 2, 3).

3. Procédé selon la revendication 2, **caractérisé en ce que**
- une première zone circulaire (7a) existe autour d'une première caractéristique (6a) sur laquelle une première manipulation d'image avec des premières caractéristiques de manipulation d'image est effectuée, et
- une deuxième zone circulaire (7b) existe autour d'une deuxième caractéristique (6b) différente de la première caractéristique (6a) sur laquelle une deuxième manipulation d'image avec des deuxièmes caractéristiques de manipulation d'image est effectuée,
- dans lequel, lorsque la première zone circulaire (7a) rencontre la deuxième zone circulaire (7b) en un point d'intersection (8), une combinaison des premières caractéristiques de manipulation d'image et des deuxièmes caractéristiques de manipulation d'image est effectuée pour la manipulation d'image dans une zone de chevauchement (19) de la première zone circulaire (7a) et de la deuxième zone circulaire (7b).

4. Procédé selon la revendication 3, **caractérisé en ce que**
- la première zone circulaire (7a), du moins dans la zone de chevauchement (19), n'est agrandie progressivement que jusqu'à ce que celle-ci ait atteint une distance par rapport à la deuxième caractéristique (6b) qui correspond à la moitié de la distance de la deuxième caractéristique (6b) par rapport au point d'intersection (8), et
- la deuxième zone circulaire (7b), du moins dans la zone de chevauchement (19), n'est agrandie progressivement que jusqu'à ce que celle-ci ait atteint une distance par rapport à la première caractéristique (6a) qui correspond à la moitié de la distance de la première caractéristique (6a) par rapport au point d'intersection (8).

5. Procédé selon la revendication 4, **caractérisé en ce que** dans la zone de recouvrement (19),
- entre le point d'intersection (8) et une extrémité de la première zone circulaire (7a), les premières caractéristiques de manipulation d'image sont appliquées avec une pondération aux deuxièmes caractéristiques de manipulation d'image, la pondération diminuant de 0,5 au point d'intersection (8) à 0 à l'extrémité de la première zone circulaire (7a), et
- entre le point d'intersection (8) et une extrémité de la deuxième zone circulaire (7b), les deuxièmes caractéristiques de manipulation d'image sont appliquées avec une pondération aux premières caractéristiques de manipulation d'image, la pondération diminuant de 0,5 au point d'intersection (8) à 0 à l'extrémité de la deuxième zone circulaire (7b) .

6. Procédé selon l'une quelconque des revendications précédentes, **caractérisé en ce que** pour chaque image (1, 2, 3) un histogramme de couleurs (10, 11, 12) est établi et une valeur moyenne de l'histogramme de couleurs (10, 11, 12) est déterminée, une moyenne arithmétique des valeurs moyennes étant déterminée, et des valeurs limites de l'histogramme de couleurs (10, 11, 12) respectif des images (1, 2, 3) sont modifiées afin de modifier la valeur moyenne en moyenne arithmétique.

7. Procédé selon l'une quelconque des revendications précédentes, **caractérisé en ce que** les images (1, 2, 3) sont des images brutes des caméras (15, 16, 17, 18) du système de caméras, dans lequel des zones des images brutes qui montrent des parties (4) d'un véhicule (13) portant le système de caméras sont éliminées, et/ou dans lequel les images brutes sont rognées dans la direction verticale jusqu'à une zone qui est à afficher sur l'image panoramique (9).

8. Produit de programme informatique, comprenant des instructions qui, lorsqu'elles sont exécutées sur un processeur programmable d'un dispositif de calcul, font que le processeur exécute les étapes d'un procédé selon l'une quelconque des revendications précédentes.

9. Appareil de commande (14), réalisé pour exécuter un procédé selon l'une quelconque des revendications 1 à 7, l'appareil de commande (14) pouvant être couplé avec des caméras (15, 16, 17, 18) d'un système de caméras d'un véhicule (13) pour la transmission de signaux.

10. Véhicule (13), comprenant un appareil de commande (14) selon la revendication 9 et plusieurs caméras (15, 16, 17, 18) d'un système de caméras servant à générer des informations d'image provenant de différentes zones d'un environnement du véhicule (13), l'appareil de commande (14) étant couplé avec le système de caméras pour la transmission de signaux.
